# EUROPÄISCHE PATENTSCHRIFT

(11) **EP 2 815 396 B1**
(45) Veröffentlichungstag und Bekanntmachung des Hinweises auf die Patenterteilung: **07.12.2016**
(21) Anmeldenummer: 13703420.3
(22) Anmeldetag: 11.02.2013
(51) Int. Cl.: G10L 15/187, G10L 13/08, G06F 17/30, G06F 3/16, G06F 17/27

(54) **VERFAHREN ZUM PHONETISIEREN EINER DATENLISTE UND SPRACHGESTEUERTE BENUTZERSCHNITTSTELLE**
METHOD FOR PHONETICIZING A DATA LIST AND SPEECH-CONTROLLED USER INTERFACE
MÉTHODE POUR PHONÉTISER UND LISTE DE DONNÉES ET INTERFACE UTILISATEUR À COMMANDE VOCALE

(30) Priorität: 16.02.2012 DE 102012202407
(43) Veröffentlichungstag der Anmeldung: 24.12.2014
(73) Patentinhaber: Continental Automotive GmbH, 30165 Hannover (DE)
(72) Erfinder: WALTHER, Jens, 35112 Fronhausen (DE)
(86) Internationale Anmeldenummer: PCT/EP2013/052654
(87) Internationale Veröffentlichungsnummer: WO 2013/120796

(56) Entgegenhaltungen:
- WO-A2-03/003152
- CA-A1- 2 256 781

## Beschreibung

Die Erfindung betrifft ein Verfahren zum Phonetisieren einer Datenliste mit textenthaltenden Listeneinträgen, wobei jeder Listeneintrag in der Datenliste in mindestens zwei Datenfelder unterteilt wird bzw. ist, sowie eine zur Durchführung dieses Verfahrens eingerichtete sprachgesteuerte Benutzerschnittstelle.

Für sprachgesteuerte Benutzerschnittstellen ist es notwendig, meist in Datenbanken vorliegende Datenlisten zu phonetisieren, um den Inhalt der Datensysteme einer Sprachsteuerung zuzuführen, bei der ein Benutzer durch Sprechen der Inhalte der Datenliste in der Benutzerstelle bestimmte Aktionen auslöst.

Ein typisches Anwendungsfeld, auf welches sich die Erfindung auch bevorzugt bezieht, ist die Verwendung einer sprachgesteuerten Benutzerschnittstelle in einer Multimedia-Einheit eines Kraftfahrzeugs, die als sprachgesteuerte Benutzerschnittstelle insbesondere u. a. ein Autotelefon und/oder eine Freisprecheinrichtung eines Kraftfahrzeugs aufweisen kann, so dass der Fahrer des Kraftfahrzeugs durch Angabe eines Namens die sprachgesteuerte Benutzerschnittstelle für das Aufbauen und Führen eines Telefonats nutzen kann. Natürlich kann die Sprachsteuerung auch zur Steuerung weiterer Funktionen der Multimedia-Einheit genutzt werden. Grundsätzlich lässt sich die Erfindung bevorzugt bei sprachgesteuerten Schnittstellen nutzen, bei denen textbasierte Dateneinträge umsortierbar sind.

Die beispielsweise als Datenbank aufgebaute Datenliste kann in diesem Fall insbesondere Namen aus Telefonbüchern oder Kontaktlisten enthalten. In diesem Anwendungsfall sind die zwei Datenfelder der Datenliste insbesondere der Vorname und der Nachname, zu denen eine Telefonnummer und/oder weitere Kontaktmöglichkeiten oder Informationen hinterlegt sind.

Eine entsprechende Vorrichtung und ein solches Verfahren sind bspw. in der CA 2,256,781 A1 beschrieben, die das Wählen einer Telefonnummer durch einfaches Sagen des Namens des Angerufenen ermöglichen. Dazu ist eine Kommunikationsverbindung mit einem Sprachpfad zu einer Empfangs- und Wahleinheit vorgesehen. Es wird eine Spracherkennungseinheit verwendet, die aus einem Spracherkennungswörterbuch einen Eintrag auswählt, der einer sprachlichen Äußerung am wahrscheinlichsten entspricht. Dazu wird eine Hör- und Sprachbildnereinheit verwendet, um das Spracherkennungswörterbuch zu erzeugen. Dazu verwendet die CA 2,256,781 A1 eine Umwandlung textlicher Symbole in eine phonetische Transkription.

Auch wenn die vorbeschriebene Anwendung einen bevorzugten Anwendungsfall der Erfindung darstellt, ist diese jedoch nicht auf genau diese Funktion beschränkt, sondern auch allgemein für sprachgesteuerte Benutzerschnittstellen anwendbar, in denen eine in Textform vorliegende Datenliste zur Erkennung durch die Sprachsteuerung phonetisiert werden soll, wobei jeder Listeneintrag der Datenliste vorzugsweise mindestens zwei Datenfelder aufweist.

In einer Datenbank kann der Listeneintrag bereits aufgeteilt in zwei Datenfelder, beispielsweise Vorname und Nachname, gespeichert sein. In einem anderen Anwendungsfall kann der Listeneintrag auch durch eine geeignete Software in zwei Datenfelder aufgeteilt werden.

Wie es bei derartigen sprachgesteuerten Benutzerschnittstellen bereits üblich ist, sollen Listeneinträge einer Datenliste der sprachgesteuerten Benutzerschnittstelle für die Spracherkennung zur Verfügung gestellt werden, um bestimmte Listeneinträge aus gesprochenen Befehlen des Benutzers identifizieren zu können. Bei einem dazu notwendigen Verfahren zum Phonetisieren der Datenliste wird ein bzw. jeder Listeneintrag aus einer Texteinstellung als Grapheme, d. h. eine Folge einzelner Graphem-Symbole bzw. Textzeichen, welche in beispielsweise der Buchstabendarstellung oder einer standardisierten Buchstabenstellung entsprechen können, in eine Phonetik konvertiert und als Phoneme, d. h. eine Folge einzelner Phonem-Symbole, abgespeichert. Entsprechend einer üblichen Definition ist ein Phonem-Symbol eine Lautdarstellung, die in einer Sprache die kleinste bedeutungsunterscheidende Einheit bildet, d. h. die gleiche distinktive Funktion erfüllt.

Diese als Phoneme, d. h. als Folge einzelner Phonem-Symbole, vorliegende phonetisierte Datenliste, die im Sinne der gewählten Begrifflichkeit ein in eine Phonetik konvertierter textenthaltender Listeneintrag, kann bei der Spracherkennung in der sprachgesteuerten Benutzerschnittstelle also dazu verwendet werden, das durch den Benutzer gesprochene Wort mit einem textenthaltenden Listeneintrag in Verbindung zu bringen und so die entsprechend vorgegebenen Funktionen auszuführen. Üblicherweise werden in dieser phonetisierten Datenliste Phoneme als zusammenhängendes Phonetikwort ohne separate Datenfelder gespeichert und insbesondere der Spracherkennung bzw. deren Spracherkenner in der sprachgesteuerten Benutzerschnittstelle zur Verfügung gestellt, so dass diese einfach auf die phonetisierte Datenliste zugreifen kann.

Der Benutzer ist daran gewöhnt, dass er Datenbanken allgemein, insbesondere aber auch Namen in Telefonbüchern oder Kontaktlisten, in ihrer grafischen (textlichen) Darstellung sehr einfach ändern bzw. umsortieren kann, um bestimmte Listeneinträge schneller zu finden oder die Datenbank in eine von ihm gewünschte Form zu bringen. Bei Telefonbüchern oder Kontaktlisten kann die Sortierung dabei üblicherweise nach Nachnamen oder nach Vornamen erfolgen, auch wenn die Erfindung nicht auf diesem Fall beschränkt ist.

Für sprachgesteuerte Benutzerschnittstellen ist es aber sehr effektiv, wenn die phonetisierten Listeneinträge eine gewisse Länge aufweisen, da ein längerer Listeneintrag zu einer deutlich besseren Erkennrate des Spracherkennens führt. Bei Telefonbüchern oder Kontaktlisten ist es daher effektiv und sinnvoll, den Vor- und Nachnamen kombiniert einzugeben. Dies gilt unabhängig von der besseren Erkennrate auch schon deshalb, weil lediglich die Nennung eines Vornamens oder Nachnamens auch zu Ambiguitäten in der Datenliste führen kann, wenn ein Nachnamen oder Vorname häufiger vorkommt. Die Wahrscheinlichkeit für derartige Dopplungen wird durch eine Kombination des Vor- und Nachnamen deutlich reduziert.

Aus dieser Praxis, Vor- und Nachnamen, bzw. allgemeine mehrere Datenfelder des Listeneintrags, in der phonetisierten Datenliste zu kombinieren, ergibt sich bei einer Änderung der Darstellung der Datenfelder (nachfolgend auch Umsortierung genannt), beispielsweise eine alphabetischen Umsortierung von Nachnamen zu Vornamen oder umgekehrt, das Problem, dass die für die Spracherkennung benötigten Phonetiken der Namen in der sprachgesteuerten Benutzerschnittstelle neu erstellt werden müssen. Dies kann beispielsweise in einer in der sprachgesteuerten Benutzerschnittstelle vorhandenen Spracherkennung bzw. dem Spracherkenner erfolgen.

Bei den bisherigen Systemen wurde das Neuerstellen der Phonetiken bzw. der sprachgesteuerten Datenliste durch eine Neuphonetisierung der umgestellten Datensätze realisiert. Da eine Phonetisierung jedoch sehr rechen- und damit ressourcenaufwendig ist, kommt es bei der Neuphonetisierung einer größeren Datenliste für den Benutzer zu einer spürbaren Latenz bzw. Wartezeit, bis die sprachgesteuerte Benutzerschnittstelle zur Erkennung von Namen aus der Datenliste bzw. allgemeiner von Listeneinträgen verwendet werden kann. Dies ist insbesondere deshalb nachteilhaft, weil ein Benutzer daran gewöhnt ist, in mobilen Datengeräten mit Datenbankfunktion beispielsweise Mobiltelefonen mit einer Kontaktdatenbank, die Namenseinträge unter Umständen unmittelbar vor einer Anwendung grafisch neu zu sortieren, um einen einfacheren Zugriff auf einen bestimmten Listeneintrag zu haben. Sofern dies durchgeführt wird, bevor der Benutzer mit dem Autotelefon und/oder einer Freisprecheinrichtung ein Gespräch führen will, ist die Latenz zur Neuphonetisierung der Listeneinträge sehr störend.

Aufgabe der vorliegenden Erfindung ist es daher, eine Möglichkeit vorzuschlagen, einzelne Datenfelder eines textenthaltenden Listeneintrags in den Phonemen nach einer Phonetisierung leichter suchen bzw. identifizieren zu können.

Diese Aufgabe wird erfindungsgemäß mit einem Verfahren nach Anspruch 1, einer sprachgesteuerten Benutzerschnittstelle nach Anspruch 7 und einem Computerprogrammprodukt nach Anspruch 8 gelöst.

Entsprechend dem eingangs erwähnten Verfahren ist dabei insbesondere vorgesehen, dass in dem Text eines Listeneintrags, insbesondere jedes Listeneintrags, ein Trennzeichen zwischen den jeweiligen Datenfeldern des Listeneintrags eingefügt, mit in die Phonetik konvertiert und dort als Phonetiksymbol in den den Listeneintrag bildenden Phonemen abgespeichert wird. Die einem Listeneintrag entsprechenden Phoneme werden in einer Phonetikdatenbank, insbesondere in der sprachgesteuerten Benutzerschnittstelle, mit abgespeichert, wobei aus den in der Phonetikdatenbank abgespeicherten Phonemen die phonetisierte Datenliste erzeugt wird. Bei dem Erzeugen der phonetisierten Datenliste bleibt das das Trennzeichen in dem Text des Listeneintrags symbolisierende Phonem-Symbol dagegen unberücksichtigt, d. h. nicht in die Phoneme eines Listeneintrags in der phonetisierten Datenliste integriert. Hierdurch wird vermieden, dass das das Trennzeichen symbolisierende Phonem-Symbol mit gesprochen werden muss.

Das Speichern der Phoneme in einer separaten Datenbank mit Trennzeichen zwischen den jeweiligen Datenfeldern des textenthaltenden Listeneintrags ermöglicht es, eine phonetisierte Datenliste aus dieser Phonetikdatenbank zu erstellen, ohne dass bei einer Umsortierung der Datenliste nach einem der mindestens zwei Datenfelder eine neue, ressourcenaufwendige Phonetisierung durchgeführt werden müsste. Es ist dagegen ausreichend, lediglich die in der Phonetikdatenbank gespeicherten Phoneme neu in der phonetisierten Datenliste zusammen zu stellen. Dies hat den Vorteil, dass eine Änderung der Darstellung, also der Umstellung der Reihenfolgen von Datenfeldern, z. B. anders sortierten Textfeldern (Vor- und Nachname), der Datenliste mit den textenthaltenden Listeneinträgen schnelle Antwortzeiten in der sprachgesteuerten Benutzerschnittstelle ermöglicht. Die phonetisierte Datenliste kann somit in annähernd der gleichen Zeit realisiert werden, die für das Umsortieren der textenthaltenden Listeneinträge in der grafischen Darstellung der Benutzerschnittstelle möglich ist. Dies wird im Wesentlichen dadurch erreicht, dass ein Trennzeichen mit in die Phonetik konvertiert wird und als spezielles Phonem-Symbol in den dem Listeneintrag entsprechenden Phonem gesucht, identifiziert und zum Umbau der Phoneme der phonetisierten Datenliste verwendet werden kann.

So ist entsprechend einer bevorzugten Ausführungsform des vorgeschlagenen Verfahrens vorgesehen, dass die textenthaltenden Listeneinträge der Datenliste entsprechend der Datenfelder beispielsweise alphabetisch oder nach sonstigen Sortierkriterien umsortierbar sind, wobei nach einer Umsortierung (d. h. im Sprachgebrauch der Anmeldung einer Änderung der Darstellung) der Listeneinträge in den bzw. jedem Listeneintrag zugeordneten Phonemen das Phonem-Symbol identifiziert wird, welches dem Trennzeichen zwischen den Datenfeldern entspricht, und wobei die Teile der Phoneme vor und nach dem identifizierten Phonem-Symbol getauscht werden, so dass die umgestellten Phoneme in einer neuen phonetisierten Datenliste gespeichert wird.

Diese Datenliste enthält wieder den gesamten Listeneintrag ohne phonetisch störende Trennsymbole und kann mit geringer Latenz in der sprachgesteuerten Stelle erzeugt werden, ohne dass eine neue Phonetisierung beispielsweise in dem Spracherkenner der sprachgesteuerten Benutzerstelle durchgeführt werden muss. Die Datenbank erlaubt also, eine phonetisierte Datenliste zu erzeugen, die der Darstellungsänderung der Textfelder nach der Umsortierung entspricht. Diese Liste ersetzt die am Spracherkenner gespeicherte Liste. Die phonetisierte Datenliste wird also erstellt, indem die in der Phonentikdatenbank mit dem das Trennzeichen symbolisierenden Phonem-Symbol gespeicherten Phoneme unter Verwendung des oder der Trennzeichen entsprechend umgestellt und in der Datenliste gespeichert werden. Die mit abgespeicherten Trennzeichen erlauben dabei den Zugriff auf die den einzelnen Datenfeldern der textlichen Darstellung Phoneme bzw. Phonem-Teilfolgen. In die neue phonetisierte Datenliste werden die Trennzeichen natürlich nicht mit eingestellt, da die Trennzeichen nicht gesprochen werden. Die neue phonetisierte Datenliste wird anschließend gespeichert und ersetzt so die zuvor gespeicherte phonetisierte Datenliste. Die sprachgesteuerte Benutzerschnittstelle, insbesondere deren Spracherkenner, kann dann auf die phonetisierte Namens- bzw. Datenliste zugreifen, um die gesprochenen Sprachbefehle zu erkennen. Hierdurch wird die rechenintensive Graphem-zu-Phonem-Konvertierung nach einer bloßen Änderung der Darstellung (Umsortierung) der Listeneinträge entsprechend der verschiedenen vorgesehenen Datenfelder vermieden. Entsprechend wird das Erstellen einer phonetisierten Datenliste nach einer Änderung der Darstellung von Listeneinträgen mit mehreren Datenfeldern entsprechend einem Datenfeld beschleunigt.

In Fortführung des vorbeschriebenen Gedankens kann ergänzend vorgesehen sein, dass insbesondere für das Umstellen der Phoneme nach einem Umsortieren der textenthaltenden Listeneinträge entsprechend der Datenfelder in den einem oder jedem Listeneintrag entsprechenden Phonemen die Speicherposition des Phonem-Symbols, welches dem in die Phonetik konvertierten Trennzeichen, beispielsweise einem Zeichen "\t", entspricht, ermittelt und die Speicherinhalte der Phoneme vor und nach der ermittelten Speicherposition vertauscht werden. Die Speicherposition kann einfach durch Zeiger im dem Speicherbereich des das Verfahren umsetzenden Mikroprozessors erreicht werden, so dass insgesamt nur einfache rechentechnische Aufgaben durch den Prozessor durchzuführen sind.

Um das Umstellen der Phoneme und das Erzeugen einer neuen phonetisierten Datenliste weiter zu beschleunigen, kann erfindungsgemäß vorgesehen sein, dass für die oder insbesondere alle einem Listeneintrag entsprechenden Phoneme die Speicherposition des Phonem-Symbols, das dem in die Phonetik konvertierten Trennzeichen entspricht, in der Phonetikdatenbank gespeichert wird. Dies kann vorzugsweise sowohl nach einem erstmaligen Ermitteln als auch bei einem Umstellen des Phonems erfolgen. Hierdurch lässt sich ein wiederholtes Umsortieren noch weiter beschleunigen.

Bei zwei sortierbaren Datenfeldern, beispielsweise einem Vornamen und einem Nachnamen, ist ein Trennzeichen ausreichend. Dies kann bei einer erfindungsgemäß bevorzugten Verwendung bei Namens- oder Kontaktlisten der Fall sein, die nur nach Vornamen oder Nachnamen sortierbaren Datenfelder aufweisen und im Übrigen nur diesen beiden sortierbaren Datenfeldern zugeordnete Informationen, beispielsweise Kontaktdaten oder -adressen, enthalten.

Da die Erfindung jedoch nicht auf diesen Fall beschränkt ist, kann allgemeiner vorgesehen sein, insbesondere wenn mehrere sortierbare Datenfelder vorhanden sind, dass insbesondere jedem sortierbaren Datenfeld eines Listeneintrags ein eigenes, d. h. jeweils verschiedenes, Trennzeichen zugeordnet wird, welches mit in die Phonetik konvertiert und dort als eigenes, d. h. jeweils verschiedenes Phonem-Symbol in den Phonemen mit abgespeichert wird. Diese Phoneme werden mit dem dem Trennzeichen entsprechenden Phonem-Symbol in der Phonetikdatenbank abgespeichert, wobei optional - wie vorbeschrieben - die Speicherposition zu jedem einem Trennzeichen entsprechendem Phonem-Symbol auch in der Datenbank mitgespeichert sein kann, um auch im Falle mehrere sortierbarer Datenfelder die Umstellung des Phonems schnell zu erreichen. Dies gilt vorzugsweise für jeden Listeneintrag.

Erfindungsgemäß kann vorgeschlagen sein, dass das Phonetisieren durchgeführt wird, wenn ein Gerät mit einer Datenliste mit textenthaltenden Listeneinträgen, insbesondere ein Mobiltelefon oder ein sonstiges, eine Datenbank enthaltendes Datengerät, insbesondere erstmalig oder nach einer Änderung oder Umsortierung der textenthaltenden Datenliste an eine sprachgesteuerte Benutzerschnittstelle, insbesondere ein Autotelefon und/oder eine Freisprecheinrichtung eines Kraftfahrzeugs, beispielsweise über eine drahtlose Kommunikationsschnittstelle, wie Bluetooth, angeschlossen wird.

Vorzugsweise weist die sprachgesteuerte Benutzerschnittstelle dann eine Spracherkennung bzw. einen Spracherkenner mit Zugriff auf die Phonetikdatenbank auf, wobei die Benutzerschnittstelle dazu eingerichtet ist, ein Umsortieren der Listeneinträge der Datenliste zu erkennen, und wobei nach Erkennen einer Umsortierung die phonetisierte Datenliste wie vorbeschrieben umgestellt wird.

Die Erfindung bezieht sich ferner auf eine sprachgesteuerte Benutzerschnittstelle, insbesondere eines Autotelefons und/oder einer Freisprecheinrichtung in einem Kraftfahrzeug, mit einer beispielsweise in einem Spracherkenner realisierten Spracherkennung, einer Datenschnittstelle zum Anbinden einer Datenliste mit textenthaltenden Listeneinträgen und einer Recheneinheit, insbesondere einem Prozessor oder Mikroprozessor, zur Steuerung der Benutzerschnittstelle und insbesondere zur Steuerung der Spracherkennung und der Datenschnittstelle. Erfindungsgemäß ist die Recheneinheit zur Durchführung des vorbeschriebenen Verfahrens oder Teilen hiervon eingerichtet. Erfindungsgemäß weist die sprachgesteuerte Benutzerschnittstelle auf eine Phonetikdatenbank auf, die in der Recheneinheit der Benutzerschnittstelle mit verwirklicht sein kann.

Schließlich bezieht sich die Erfindung auf ein Computerprogrammprodukt mit Programmcodemitteln für die Einrichtung einer Recheneinheit insbesondere einer sprachgesteuerten Benutzerschnittstelle zur Durchführung eines vorbeschrieben Verfahrens oder Teilen hiervon. Die Programmcodemittel sind derart ausgebildet, dass sie bei einer Installation auf der Recheneinheit diese dazu einrichten, das erfindungsgemäße Verfahren auszuführen.

Weitere Vorteile, Merkmale und Anwendungsmöglichkeiten der vorliegenden Erfindung ergeben sich auch aus der nachfolgenden Beschreibung eines Ausführungsbeispiels und der Zeichnungen. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:
- Fig. 1: schematisch den Verfahrensablauf zum Phonetisieren einer Datenliste in einer sprachgesteuerten Benutzerschnittstelle;
- Fig. 2: eine Ausführungsform des erfindungsgemäß vorgeschlagenen Verfahrens nach Umsortierung der textenthaltenden Datenliste; und
- Fig.3: einen beispielhalten Eintrag in der Phonetik-Datenbank.

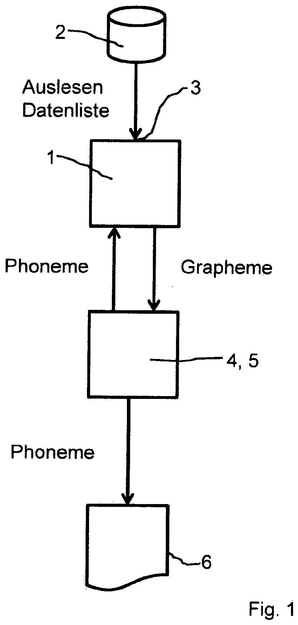

In Fig. 1 wird der grundsätzliche Prozess zum Phonetisieren einer Datenliste mit textenthaltenden Listeneinträgen durch eine sprachgesteuerte Benutzerschnittstelle 1 beschreiben, bei der es sich insbesondere um eine Multimedia-Steuereinheit eines Kraftfahrzeugs insbesondere mit Telefon- und/oder Freisprechfunktion, handeln kann.

Es ist üblich, einer derartigen sprachgesteuerten Benutzerschnittstelle 1 durch andere Geräte, beispielsweise einem Mobiltelefon oder ein anderes Speichergerät, eine textenthaltende Datenliste 2 zu übermitteln. Dies kann beispielsweise dann der Fall sein, wenn das Gerät mit der textenthaltenden Datenliste 2 über eine Datenschnittstelle 3, drahtlos beispielsweise via Bluetooth bzw. WLAN oder drahtgebunden, an die sprachgesteuerte Benutzerschnittstelle gekoppelt wird. Nach der Anbindung der textenthaltenden Datenliste 2 über die Datenschnittstelle 3 an die sprachgesteuerte Benutzerschnittstelle 1 wird von letzterer die Datenliste 2 ausgelesen, wobei ein Listeneintrag der Datenliste in mindestens zwei Datenfelder unterteilt wird.

Diese Unterteilung kann bei dem Auslesen durch eine geeignete Software erfolgen oder bereits in der Datenliste, beispielsweise durch integrierte Trennzeichen zwischen den einzelnen Datenfeldern der Listeneinträge, gespeichert sein. In einer bevorzugten, speziellen Anwendung kann es sich hierbei insbesondere um eine Namens- oder Kontaktliste handeln, in der der Vorname und der Nachname jeweils ein Datenfeld darstellen, wobei eine Sortierung der Liste sowohl nach dem ersten als auch nach dem zweiten Datenfeld möglich ist. Weitere Datenfelder enthalten dann die gewünschten Kontaktadressen, beispielsweise eine Telefonnummer oder E-Mail, oder sonstige Informationen.

Die textenthaltende Datenliste 2 steht nach dem Auslesen in der sprachgesteuerten Benutzerschnittstelle 1 in einer Textdarstellung als Grapheme, d. h. eine Folge einzelner Graphem-Symbole, zur Verfügung. Bei den Graphem-Symbolen kann es sich insbesondere um zumindest innerhalb der Anwendung standardisierte Buchstaben oder, allgemeiner, Textzeichen, handeln, die einen eindeutigen Textinhalt haben.

Um eine Sprachsteuerung durchführen zu können, muss die sprachgesteuerte Benutzerschnittstelle 1 aus dieser Textdarstellung eine Phonetik erzeugen, um diese mit Spracheingaben des Benutzers vergleichen und die entsprechenden Aktionen durchführen zu können. Dabei werden die einzelnen Datenfelder der textenthaltenden Listeneinträge zusammengeführt, um die Erkennungsrate bei der Spracherkennung zu erhöhen.

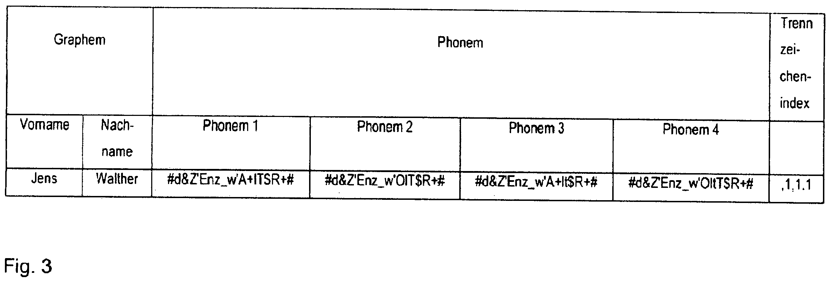

Die einzelnen Listeeinträge werden dann in eine Recheneinheit 4 der sprachgesteuerten Benutzerschnittstelle 1 entsprechend üblicher sprachbezogener Vorschriften in eine Phonetik konvertiert und als Phonem in einer phonetisierten Datenliste gespeichert. Dazu ist in der Recheneinheit 4 der sprachgesteuerten Benutzerschnittstelle 1 ein Spracherkenner 5 bzw. eine Spracherkennung integriert. Dies ist bereits bekannt und muss daher nicht näher beschrieben werden, wobei ergänzend auf das nachfolgend beschriebene konkrete Ausführungsbeispiel im Zusammenhang mit Fig. 3 verwiesen wird.

Sobald die Phonetisierung in der Recheneinheit 4, insbesondere dem darin integrierten Spracherkenner 5, der sprachgesteuerten Benutzerschnittstelle 1 stattgefunden hat, kann die sprachgesteuerte Benutzerschnittstelle 1 nun Sprachbefehle entgegennehmen, sofern die Sprachbefehle in der Form gegeben werden, in der die Datenliste 2 phonetisiert wurde, d. h. insbesondere auch in der gewählten Sortierung der einzelnen Datenfelder. Soweit ist dieser Prozess in üblichen Geräten umgesetzt.

Im Stand der Technik wird der vorbeschriebene Vorgang wiederholt, sobald die textenthaltende Datenliste 2 beispielsweise nach einem anderen Datenfeld sortiert wird, so dass sich die einzelnen zu phonetisierenden Listeneinträge ändern. Dies ist beispielsweise dann der Fall, wenn bei einer Namens- oder Kontaktliste eine Umsortierung zwischen Nachnamen und Vornamen stattfindet, so dass die Listeneinträge einmal in der Form "Nachname Vorname" und ein anderes Mal in der Form "Vorname Nachname" vorliegen, was entsprechend zu anderen Phonemen des Listeneintrags führt.

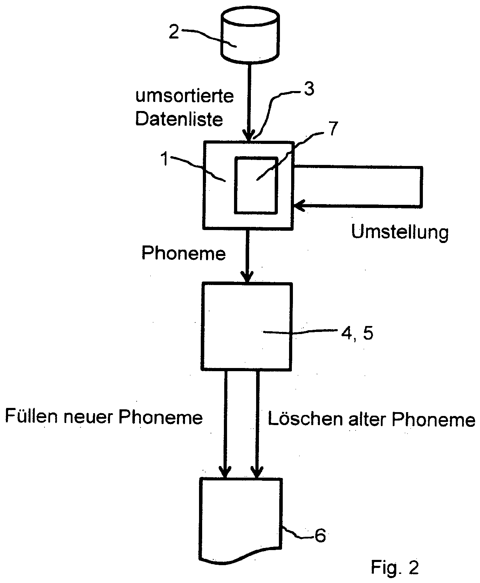

Dies ist jedoch sehr rechenintensiv. Daher schlägt die Erfindung wie in Fig. 1 dargestellt vor, dass jeder Listeneintrag als Phoneme in der sprachgesteuerten Benutzerschnittstelle auch in einer in Fig. 2 dargestellten Phonetikdatenbank 7 abgespeichert werden, die natürlich auch in der Recheneinheit 4 bzw. einer der Recheneinheit 4 zugeordneten, nicht dargestellten Speichereinheit vorgesehen sein kann.

Diese einem Listeneintrag entsprechenden und in der Phonetikdatenbank 7 gespeicherten Phoneme enthalten dabei auch das in ein Phonem-Symbol konvertierte Trennzeichen aus dem textenthaltenden Listeneinträgen, wobei vorzugsweise die Position des Phonem-Symbols in den Phonemen des phonetisierten Listeneintrags ermittelt und mit in der Phonetikdatenbank 7 abgespeichert wird.

Dies hat den Vorteil, dass bei dem Eingeben einer inhaltsgleichen, aber umsortierten Datenliste 2 in die sprachgesteuerten Benutzerschnittstelle 1 durch die sprachgesteuerten Benutzerschnittstelle 1 in der Phonetikdatenbank 7 jeweils das dem Trennzeichen entsprechende Phonem-Symbol identifiziert und jeder Listeneintrag durch Vertauschen der Phoneme vor und hinter dem Phonem-Symbol umgestellt wird.

Diese neuerzeugten Phoneme, (d. h. das aus den einzelnem Phonemen gebildete Phonem-Folge), werden von der Recheneinheit 4 bzw. dem Spracherkenner 5 in die phonetisierte Datenliste 6 eingestellt, wobei die alten Phoneme gelöscht werden bzw. die alte phonetisierte Datenliste 6 gelöscht wird.

Hierdurch ist erfindungsgemäß eine Umstellung besonders einfach möglich, ohne dass eine neue Phonetisierung durchgeführt werden soll.

Nachfolgend wird noch ein konkretes Ausführungsbeispiel beschrieben, bei dem das erfindungsgemäße Verfahren in einem Fahrzeug-Entertainmentgerät mit einer sprachgesteuerten Benutzerschnittstelle 1 zum Einsatz kommt. Das Fahrzeug-Entertainmentgerät enthält eine Datenschnittstelle 3 für Bluetooth Geräte. Zentrale Funktion des Fahrzeug-Entertainmentgeräts ist der Aufbau einer Telefonverbindung über ein derart angeschlossenes Mobiltelefon. Die Wahl der Telefonnummer kann über haptische oder sprachliche Eingabe der Telefonnummer sowie über eine Anwahl des Kontaktnamens aus dem Telefonbuch des Mobilgerätes realisiert werden. Weiterhin werden Officefunktionen, wie eine Nachrichtenliste oder Kalenderfunktionen, unterstützt.

Bei der Eingabe der Telefonbuchnamen soll es im Ausführungsbeispiel möglich sein, die Namen in der Form einzugeben, wie sie auf dem Bildschirm dargestellt werden. Hierzu werden zwei Darstellungen unterstützt: entweder wird der Vorname gefolgt von dem Nachnamen eingegeben oder die Eingabe erfolgt umgekehrt, d. h. der Nachname wird gefolgt von dem Vornamen eingegeben. Die Umschaltung der Darstellungen zwischen Vornamen und Nachnamen als erster Eingabe wird von der graphischen Benutzerschnittstelle innerhalb weniger 100 ms unterstützt.

Die sprachgesteuerte Benutzerschnittstelle 1 sollte dies in möglichst vergleichbarer Zeit erreichen. Um dies zu realisieren, könnte man bei der Synchronisation der Telefonbucheinträge beide Eingabevarianten als phonetisierte Namensliste am Spracherkenner hinterlegen. Dies würde jedoch eine Verdopplung der Datenmenge und damit des Speicherverbrauchs bedeuten sowie zu einer Verdoppelung der Latenz (Warte- bzw. Bearbeitungszeit) bei der Erstellung der Namenslisten führen. Die Verschlechterung der Initiallatenz kann umgangen werden, wenn erst bei einem Umschalten der Darstellung der Liste eine neue phonetisierte Datenliste erzeugt wird. Die Phonetisierung der Liste muss dann bei den bekannten Verfahren aber komplett neu erstellt werden. Dies bedeutet eine Verzögerung der Sprechbarkeit der Liste, die ein Vielfaches über die Umschaltung der graphischen Darstellung hinausgeht.

Um die oben dargestellten Einschränkungen zu umgehen, wurde das erfindungsmäßige Verfahren verwendet, das in einem konkreten Ausführungsbeispiel folgende Verfahrensschritte aufweist:
1. Nachdem das Fahrzeug-Entertainmentgerät mit der sprachgesteuerten Benutzerschnittstelle 1 über die Bluetooth-Datenschnittstelle 3 Verbindung zum Mobilgerät mit der textenthaltenden Datenliste aufgenommen hat, wird eine interne Datenbank des Fahrzeug- Entertainmentgeräts mit den (textenthaltenden) Telefonbucheinträgen des Mobilgerätes befüllt.
2. Die Daten werden von der sprachgesteuerten Benutzerschnittstelle 1 aus der internen Datenbank ausgelesen. Dabei werden Vor- und Nachname unterschieden, wobei unter dem Vornamen auch weitere Mittelnamen gespeichert sein können.
3. Die Daten werden paketweise gelesen und zwischen Vor- und Nachnamen wird ein Trennzeichen ('\t') eingefügt.
4. Die Daten werden zur Verbesserung der Erkennrate präprozessiert, wie in einer parallelen Patentanmeldung desselben Erfinders beschrieben. Die Präprozessierung dient insbesondere dazu, die auch als Grapheme bezeichnete Textdarstellung der Listeneinträge sprach- und/oder benutzerdefiniert zu modifizieren. Dies kann beispielsweise mit einem Parser erfolgen. Dabei wird das Trennzeichen ('\t') erhalten.
5. Vor dem Einfügen jedes einzelnen Datensatzes in die phonetisierte Liste wird das Trennzeichen dann entfernt.
6. Die Phoneme werden in einer weiteren, von der internen Datenbank zur Zwischenspeicherung verschiedenen Phonetikdatenbank 7 gespeichert, wobei die Position des Trennzeichens für jedes der Phoneme mitgespeichert wird.
7. Beim Umschalten der Darstellung der Telefonbuchliste wird nun die aktuelle phonetisierte Namensliste (Datenliste) gelöscht und eine neue phonentisierte Namens- bzw. Datenliste 7 unter Verwendung der Einträge in der Phonetikdatenbank erstellt. Ein Beispiel für den Inhalt der Phonetikdatenbank 7 ist für einen Listeneintrag mit dem Vor- und Nachnamen des Erfinders in Fig. 3 dargestellt. Diese zeigt englische Phoneme in LH+ Kodierung.
8. Die neue phonetisierte Namens- bzw. Datenliste 7 wird befüllt mit den Daten aus der Phonetikdatenbank 7, wobei diese in umgekehrter Reihenfolge - bezogen auf die während der Synchronisation (Schritte 1 - 7) gespeicherte Reihenfolge - in die Liste eingefügt werden.

Da das Einfügen der Daten in die phonetisierte Liste ohne Phonetisierungprozess stattfindet, ist die phonetisierte Namens- bzw. Datenliste 7 sehr kurze Zeit nach der graphischen Darstellung auch sprachbedienbar, ohne dass signifikant ein erhöhter Speicherbedarf entsteht.

## Patentansprüche

1. Verfahren zum Phonetisieren einer Datenliste (2) mit textenthaltenden Listeneinträgen, die als Phoneme in einer phonetisierten Datenliste (6) gespeichert werden, wobei
- jeder Listeneintrag in der Datenliste (2) in mindestens zwei Datenfelder unterteilt und einer sprachgesteuerten Benutzerschnittstelle (1) zur Verfügung gestellt wird,
- in den Text des Listeneintrags ein Trennzeichen zwischen den jeweiligen Datenfeldern des Listeneintrags eingefügt wird,
- der Listeneintrag aus einer Textdarstellung in eine Phonetik konvertiert wird,
die Phoneme des Listeneintrags in einer Phonetikdatenbank (7) abgespeichert werden, und
- aus den in der Phonetikdatenbank (7) abgespeicherten Phonemen die phonetisierte Datenliste (6) erzeugt wird,
**dadurch gekennzeichnet, dass** das Trennzeichen mit in die Phonetik konvertiert wird und in der Phonetikdatenbank (7) als Phonem-Symbol in den dem Listeneintrag entsprechenden Phonemen mit abgespeichert wird, wobei das das Trennzeichen in dem Text des Listeneintrags symbolisierende Phonem-Symbol bei dem Erzeugen der phonetisierten Datenliste (6) unberücksichtigt bleibt und nicht in die Phoneme eines Listeneintrags in der phonetisierten Datenliste (6) integriert wird.

2. Verfahren nach Anspruch 1, **dadurch gekennzeichnet, dass** die textenthaltenden Listeneinträge der Datenliste (2) entsprechend der Datenfelder umsortierbar sind, wobei nach einer Änderung der Darstellung bzw. Umsortierung der Listeneinträge in den einem Listeneintrag zugordneten Phonemen das dem Trennzeichen entsprechende Phonem-Symbol identifiziert wird und wobei die Teile der Phoneme vor und nach dem identifizierten Phonem-Symbol vertauscht werden und die so umgestellte Phoneme in einer neuen phonetisierten Datenliste gespeichert werden.

3. Verfahren nach Anspruch 2, **dadurch gekennzeichnet, dass** in den einem Listeneintrag entsprechenden Phonemen die Speicherposition des dem in die Phonetik konvertierten Trennzeichens entsprechenden Phonem-Symbols ermittelt und die Speicherinhalte vor und nach der ermittelten Speicherposition des Phonem-Symbols, welches dem in die Phonetik konvertierten Trennzeichen entspricht, vertauscht werden.

4. Verfahren nach Anspruch 3, **dadurch gekennzeichnet, dass** die Speicherposition des Phonem-Symbols, welches dem in die Phonetik konvertierten Trennzeichen entspricht, in der Phonetikdatenbank gespeichert wird.

5. Verfahren nach einem der vorhergehenden Ansprüche,
**dadurch gekennzeichnet, dass** jedem Datenfeld eines Listeneintrags ein eigenes Trennzeichen zugeordnet wird, mit in die Phonetik konvertiert und als eigenes Phonem-Symbol mit abgespeichert wird.

6. Verfahren nach einem der vorhergehenden Ansprüche,
**dadurch gekennzeichnet, dass** das Phonetisieren durchgeführt wird, wenn ein Gerät mit einer Datenliste (2) mit textenthaltenden Listeneinträgen an eine sprachgesteuerte Benutzerschnittstelle (1) angeschlossen wird, welche sprachgesteuerte Benutzerschnittstelle eine Spracherkennung mit Zugriff auf die Phonetikdatenbank (7) aufweist, wobei durch die Benutzerschnittstelle (1) eine Änderung der Darstellung bzw. ein Umsortieren der Listeneinträge der Datenliste (2) erkannt wird und wobei nach Erkennen einer Änderung bzw. Umsortierung die phonetisierte Datenliste (6) umgestellt wird.

7. Sprachgesteuerte Benutzerschnittstelle mit einer Spracherkennung (5), einer Datenschnittstelle (3) zum Anbinden einer Datenliste (2) mit textenthaltenden Listeneinträgen und einer Recheneinheit zur Steuerung der Benutzerschnittstelle (1), **dadurch gekennzeichnet, dass** die Recheneinheit zur Durchführung des Verfahrens nach einem der Ansprüche 1 bis 6 eingerichtet ist.

8. Computerprogrammprodukt mit Programmcodemitteln für die Einrichtung einer Recheneinheit einer sprachgesteuerten Benutzerschnittschelle (1) zur Durchführung eines Verfahrens nach einem der Ansprüche 1 bis 6.

## Claims

1. Method for phonetizing a data list (2) having text-containing list entries stored as phonemes in a phonetized data list (6),
- each list entry in the data list (2) being subdivided into at least two data fields and being provided to a voice-controlled user interface (1),
- a separating character being inserted into the text of the list entry between the respective data fields of the list entry,
- the list entry being converted from a text representation into phonetics,
the phonemes of the list entry being stored in a phonetic database (7), and
- the phonetized data list (6) being produced from the phonemes stored in the phonetic database (7), **characterized in that** the separating character is concomitantly converted into phonetics and is concomitantly stored in the phonetic database (7) as a phoneme symbol in the phonemes corresponding to the list entry, the phoneme symbol symbolizing the separating character in the text of the list entry remaining disregarded when producing the phonetized data list (6) and not being integrated in the phonemes of a list entry in the phonetized data list (6).

2. Method according to Claim 1, **characterized in that** the text-containing list entries in the data list (2) can be resorted according to the data fields, in which case, after a change in the representation or resorting of the list entries, the phoneme symbol corresponding to the separating character is identified in the phonemes associated with a list entry, and in which case the parts of the phonemes before and after the identified phoneme symbol are interchanged and the phonemes which have been reorganized in this manner are stored in a new phonetized data list.

3. Method according to Claim 2, **characterized in that** the storage position of the phoneme symbol corresponding to the separating character converted into phonetics is determined in the phonemes corresponding to a list entry and the storage contents before and after the determined storage position of the phoneme symbol which corresponds to the separating character converted into phonetics are interchanged.

4. Method according to Claim 3, **characterized in that** the storage position of the phoneme symbol which corresponds to the separating character converted into phonetics is stored in the phonetic database.

5. Method according to one of the preceding claims, **characterized in that** a separate separating character is assigned to each data field of a list entry, is concomitantly converted into phonetics and is concomitantly stored as a separate phoneme symbol.

6. Method according to one of the preceding claims, **characterized in that** the phonetization is carried out if a device containing a data list (2) having text-containing list entries is connected to a voice-controlled user interface (1), which voice-controlled user interface has a voice recognition system with access to the phonetic database (7), a change in the representation or resorting of the list entries in the data list (2) being detected by the user interface (1), and the phonetized data list being reorganized after a change or resorting has been detected.

7. Voice-controlled user interface having a voice recognition system (5), a data interface (3) for connecting a data list (2) having text-containing list entries, and a computing unit for controlling the user interface (1), **characterized in that** the computing unit is set up to carry out the method according to one of Claims 1 to 6.

8. Computer program product having program code means for setting up a computing unit of a voice-controlled user interface (1) for carrying out a method according to one of Claims 1 to 6.

## Revendications

1. Procédé de phonétisation d'une liste de données (2) comprenant des éléments de liste contenant du texte qui sont enregistrés sous la forme de phonèmes dans une liste de données (2) phonétisée,
- chaque élément de liste dans la liste de données (2) étant divisé en au moins deux champs de données et étant mis à la disposition d'une interface utilisateur (1) à commande vocale,
- un caractère de séparation entre les champs de données respectifs de l'élément de liste étant inséré dans le texte de l'élément de liste,
- l'élément de liste étant converti à partir d'une représentation textuelle en une transcription phonétique,
- les phonèmes de l'élément de liste étant enregistrés dans une base de données phonétiques (7) et
- la liste de données (6) phonétisée étant générée à partir des phonèmes enregistrés dans la base de données phonétiques (7),
**caractérisé en ce que** le caractère de séparation est lui aussi converti dans la transcription phonétique et co-enregistré dans la base de données phonétiques (7) sous la forme d'un symbole de phonème dans les phonèmes correspondant à l'élément de liste, le symbole de phonème qui symbolise le caractère de séparation dans le texte de l'élément de liste n'étant pas pris en compte lors de la génération de la liste de données phonétisée (6) et n'étant pas intégré dans les phonèmes d'un élément de liste dans la liste de données phonétisée (6).

2. Procédé selon la revendication 1, **caractérisé en ce que** l'ordre de tri des éléments de liste contenant du texte de la liste de données (2) peut être modifié en fonction des champs de données, le symbole de phonème correspondant au caractère de séparation étant identifié dans chaque élément de liste après une modification de la représentation ou un changement de l'ordre de tri des éléments de liste et les parties des phonèmes avant et après le symbole de phonème identifié étant permutées et les phonèmes ainsi déplacés étant enregistrés dans une nouvelle liste de données phonétisée.

3. Procédé selon la revendication 2, **caractérisé en ce que** la position d'enregistrement du symbole de phonème correspondant au caractère de séparation converti en la transcription phonétique est déterminée dans les phonèmes correspondant à chaque élément de liste et les contenus d'enregistrement, avant et après la position d'enregistrement déterminée du symbole de phonème qui correspond au caractère de séparation converti en la transcription phonétique, sont permutés.

4. Procédé selon la revendication 3, **caractérisé en ce que** la position d'enregistrement du symbole de phonème qui correspond au caractère de séparation converti en la transcription phonétique est enregistrée dans la base de données phonétiques.

5. Procédé selon l'une des revendications précédentes, **caractérisé en ce qu'**un caractère de séparation propre est associé à chaque champ de données d'un élément de liste, lequel est également converti en la transcription phonétique et co-enregistré en tant que symbole de phonème propre.

6. Procédé selon l'une des revendications précédentes, **caractérisé en ce que** la phonétisation est effectuée lorsqu'un appareil comprenant une liste de données (2) avec des éléments de liste contenant du texte est raccordé à une interface utilisateur (1) à commande vocale, ladite interface utilisateur à commande vocale possédant une reconnaissance vocale avec accès à la base de données phonétiques (7), une modification de la représentation ou un changement de l'ordre de tri des éléments de liste de la liste de données (2) étant reconnu(e) par le biais de l'interface utilisateur (1) et la liste de données phonétisée (6) étant permutée après la reconnaissance d'une modification ou d'un changement de l'ordre de tri.

7. Interface utilisateur à commande vocale munie d'une reconnaissance vocale (5), d'une interface de données (3) destinée à la connexion d'une liste de données (2) comprenant des éléments de liste contenant du texte et une unité informatique destinée à commander l'interface utilisateur (1), **caractérisée en ce que** l'unité informatique est conçue pour mettre en oeuvre le procédé selon l'une des revendications 1 à 6.

8. Produit de programme informatique comprenant des moyens de code de programme pour la configuration d'une unité informatique d'une interface utilisateur (1) à commande vocale en vue de mettre en oeuvre un procédé selon l'une des revendications 1 à 6.
